Europäisches Patentamt

European Patent Office

Office européen des brevets

(19)

(11) Veröffentlichungsnummer: **0 181 499**
**B1**

(12) **EUROPÄISCHE PATENTSCHRIFT**

(45) Veröffentlichungstag der Patentschrift: **22.08.90**

(51) Int. Cl.⁵: **B 60 N 2/12**

(21) Anmeldenummer: **85112822.3**

(22) Anmeldetag: **10.10.85**

(54) **Längsführung für Fahrzeugsitze mit einer C-profilförmigen Aussenschiene und einer Innenschiene mit Hutprofil.**

(30) Priorität: **18.10.84 DE 3438229**

(43) Veröffentlichungstag der Anmeldung:
**21.05.86 Patentblatt 86/21**

(45) Bekanntmachung des Hinweises auf die
Patenterteilung:
**22.08.90 Patentblatt 90/34**

(84) Benannte Vertragsstaaten:
**DE FR GB**

(56) Entgegenhaltungen:
**EP-A-0 130 275**
**FR-A-1 325 348**
**FR-A-2 286 723**
**GB-A-2 108 380**

(73) Patentinhaber: **C. Rob. Hammerstein GmbH**
**Postfach 13 01 18 Merscheiderstrasse 167**
**D-5650 Solingen 13 (DE)**

(72) Erfinder: **Bauer, Heinz**
**Hammerstrasse 9**
**D-5650 Solingen 11 (DE)**
Erfinder: **Becker, Burckhard, Dipl.-Ing.**
**Obenkatternberg 25**
**D-5650 Solingen (DE)**
Erfinder: **Frohnhaus, Ernst-Reiner**
**Hammerstrasse 13**
**D-5650 Solingen 11 (DE)**
Erfinder: **Gedig, Alfred, Dipl.-Ing.**
**Hammerstrasse 28**
**D-5650 Solingen 11 (DE)**

(74) Vertreter: **Bauer, Wulf, Dr.**
**Wolfgang-Müller-Strasse 12**
**D-5000 Köln 51 (Marienburg) (DE)**

**Beschreibung**

Die Erfindung bezieht sich auf eine Längsführung für Fahrzeugsitze mit einer C-profilförmigen Außenschiene und einer in dieser längsverschiebbar durch Führungsmittel geführten Innenschiene mit Hutprofil, bei der

— die Außenschiene im Profil gesehen eine Basis aufweist, von der randseitig und im rechten Winkel jeweils eine Seitenwand wegsteht und jede Seitenwand an ihrem anderen Ende in einen Führungsflansch übergeht, der nach innen gerichtet ist und im wesentlichen parallel zur Basis verläuft,

— die Innenschiene im Profil gesehen ebenfalls eine Basis aufweist, die parallel zur Basis der Außenschiene verläuft und von der seitlich jeweils eine Seitenwand rechtwinklig wegsteht, die jeweils an ihrem anderen Ende in einen Führungsflansch übergeht, der nach außen gerichtet ist, parallel zur Basis verläuft und eine Außenfläche aufweist, die einer entsprechenden Innenfläche des benachbarten Führungsflansches der Außenschiene direkt gegenüberliegt und mit dieser jeweils einen äußeren Führungskanal für die Führungsmittel bildet,

— wobei zwischen den Innenflächen der Basen ein innerer Führungskanal für als Rollkörper ausgebildete Führungsmittel vorhanden ist und zwischen einem Führungsflansch der Innenschiene und der gegenüberliegenden Innenwand der Basis der Außenschiene ein Luftspalt von wenigen Millimetern freibleibt.

Derartige Längsführungen für Fahrzeugsitze sind umfangreich in Fahrzeugen eingesetzt worden und beispielsweise auch in dem deutschen Gebrauchsmuster 1 878 301 der Anmelderin beschrieben. Bei diesen vorbekannten Längsführungen ist die Außenschiene relativ flach, so sind die Seitenwände der Außenschiene in einem konkreten Ausführungsbeispiel nicht höher als ein Zentimeter. Dagegen ist die Innenschiene relativ hochstegig ausgebildet, die Höhe ihrer Seitenwände liegt bei mehr als zwei Zentimetern. Das Profil der vorbed kannten Längsführung ist klappsymmetrisch. Auf Grund der deutlich unterschiedlichen Höhen der Seitenwände der jeweiligen Schienen ist die Steifigkeit der beiden Schienen in vertikaler Richtung verschieden. Weiterhin ist bei der vorbekannten Längsführung die Breite des inneren Führungskanals ausschließlich durch den lichten Abstand der Seitenwände der Innenschiene bestimmt. Die Gesamtprofilbreite der vorbekannten Längsführung ist daher im wesentlichen durch dieses Innenmaß und die Breite der beiden seitlichen Führungsbereiche, in denen die Führungsflansch aufeinander liegen, bestimmt. Wenn der innere Führungskanal nicht nur für die dort angeordneten Rollkörper, sondern auch für Einstell- oder Verstellmechanismen, beispielsweise Zahnstangen, genutzt werden soll, so wird die Gesamtbreite der Längsführung recht groß, ohne daß hierdurch die Steifigkeit in vertikaler Richtung günstig beeinflußt wird.

Ausgehend von der vorbekannten Längsführung ist es Aufgabe der Erfindung, die Nachteile dieser Längsführung zu vermeiden und die Längsführung der eingangs genannten Art dahingehend weiterzubilden, daß die Steifigkeit der Außenschiene erhöht ist, insbesondere dem Steifigkeitswert der Innenschiene entspricht, und daß bei gleicher Gesamtbreite die Breite des inneren Führungskanals erhöht ist.

Diese Aufgabe wird ausgehend von der Längsführung der eingangs genannten Art dadurch gelöst, daß die eine Seitenwand der Außenschiene deutlich höher ist als die andere Seitenwand, zum Beispiel doppelt so hoch, daß entsprechend die der längeren Seitenwand der Außenschiene benachbarte Seitenwand der Innenschiene deutlich kürzer ausgebildet ist als die andere Seitenwand, und daß der Führungsflansch der längeren Seitenwand der Außenschiene im wesentlichen in der Ebene der Basis der Innenschiene verläuft.

Diese Längsführung ist im Profil nicht mehr klappsymmetrisch, vielmehr befinden sich die beiden äußeren Führungskanäle nahezu auf einer Diagonalen des nahezu rechteckförmigen Gesamtprofils der Längsführung. Hierdurch ändert sich in einem Führungsbereich, bei dem die Seitenwand der Außenschiene wie bei der vorbekannten Längsführung eine geringe Höhe aufweist, nichts, jedoch verschiebt sich der andere Führungsbereich weg von der Basis der Außenschiene hin zur Basis der Innenschiene. Hierdurch bleibt zwischen der Innenfläche des entsprechenden Führungsflansches der Innenschiene und der Basis der Außenschiene ein relativ großer Bereich frei, der den freien Innenquerschnitt des inneren Führungskanals gegenüber dem Stand der Technik erhöht. Durch geeignete Wahl der Höhen der Seitenwände läßt sich die Steifigkeit der beiden Schienen im wesentlichen angleichen. Darüberhinaus kann die Längsführung nun auch neunzig Grad-versetzt eingebaut werden, falls die Innenfläche der längeren Seitenwand der Innenschiene und die Innenfläche der längeren Seitenwand der Außenschiene als Abrollflächen für den Rollkörper des inneren Führungskanals benutzt werden. Dabei kann durch geeignete Profilwahl der lichte Abstand zwischen den Basen dem lichten Abstand der jeweils längeren Seitenwände angepaßt werden, wodurch Rollkörper gleichen Durchmessers für beide Orientierungen der Längsführung verwendet werden können.

In dem bei weitgehend gleichbleibenden Außenabmessungen nunmehr deutlich vergrößerten inneren Führungskanal können Elemente einer Einstelloder Verstellvorrichtung, beispielsweise Zahnstangen, Ritzel oder dergleichen, untergebracht werden. Andererseits kann bei Befestigung der Außenschiene mittels Schraubbolzen entweder ein Schraubbolzen mit deutlich größerem Kopfdurchmesser verwendet werden, ohne daß die Breite der Längsführung erhöht werden muß, oder die Gesamtbreite der Längsführung kann deutlich verringert werden, wenn die bisherigen Befestigungsbolzen beibehalten werden, da sich die Löcher für die Befestigungsbolzen nun nicht mehr in der Quermitte der Basis der Außenschiene befinden, sondern hier gegenüber zur längeren Seitenwand der Außenschiene versetzt sind, weil nun der zusätzliche, oben angesprochene Raum zur Verfügung steht und genutzt werden kann.

In Weiterbildung der Erfindung wird vorgeschlagen, den Führungsflansch der längeren Seitenwand der Außenschiene wenige Millimeter, zum Beispiel um seine Materialstärke, gegenüber der Ebene der Basis der Innenschiene zur eigenen Basis hin zu versetzen. Hierdurch besteht zwischen einer an der Außenseite der Basis der Innenschiene befestigten Platte, beispielsweise einem Sitzrahmen und der Außenseite des Führungsflansches der längeren Seitenwand der Außenschiene ein kleiner Luftspalt, der eine freie, ungehinderte Bewegung der Außenschiene gestattet. Ein besonderer Vorzug einer derartigen Längsführung ist es, daß sie weitgehend beliebig befestigt werden kann, beispielsweise — wie herkömmlich — an den Basen, aber auch an den Seitenwänden, beispielsweise der längeren Seitenwand der Außenschiene.

In bevorzugter Weiterbildung sind beide Schienen jeweils einstückig aus einem Blechzuschnitt geformt. Hierdurch werden Verbindungen zwischen den einzelnen Teilen einer Schiene, beispielsweise durch Schweißen, vermieden. Weiterhin ist es vorteilhaft, auch die Führungsmittel der beiden äußeren Führungskanäle als Wälzkörper auszubilden, wodurch die für eine Verschiebung der Schienen gegeneinander benötigte Kraft gering bleibt. Andererseits können die Führungsmittel in diesen äußeren Führungskanälen aber auch durch Kunststoffstangen oder andere, geeignete Gleitkörper gebildet werden.

Weitere Vorzüge und Merkmale der Erfindung ergeben sich aus den übrigen Ansprüchen sowie der nun folgenden Beschreibung eines bevozugten, jedoch nicht einschränkend zu verstehenden Ausführungsbeispiels. Hierzu wird auf die Zeichnung verwiesen, in dieser zeigen:

Fig. 1 eine perspektivische Darstellung eines Abschnittes einer Längsführung,

Fig. 2 eine Draufsicht auf die Längsführung gemäß Figur 1,

Fig. 3 eine perspektivische Darstellung einer Längsführung entsprechend den vorangegangenen Figuren mit einer Verriegelungsvorrichtung, und

Fig. 4 eine Darstellung entsprechend Figur 3 mit einer anderen Ausbildung der Verriegelungsvorrichtung.

Die in den Figuren gezeigte Längsführung für Fahrzeugsitze hat eine im Profil C-förmige Außenschiene 20 und eine in dieser längsverschiebbar angeordnete und durch Führungsmittel 22, 24, 26 geführte Innenschiene 28 mit Hutprofil. Die Außenschiene 20 weist im Profil gesehen eine Basis 30 auf, die wesentlich die gesamte Breite der Längsführung bestimmt. Von ihr stehen randseitig und im rechten Winkel eine linke und eine rechte Seitenwand 32, 34 weg, jede Seitenwand 32, 34 geht an ihrem freien, in den Figuren oberen Ende in einen Führungsflansch 36, 38 über, der jeweils rechtwinklig nach innen gerichtet ist und damit im wesentlichen parallel zur Basis 30 verläuft. Die Innenschiene 28 hat ebenfalls im Profil gesehen eine Basis 40, die jedoch deutlich schmaler ist als die Basis 30 der Außenschiene und parallel zu letzterer verläuft. Von ihr stehen ebenfalls seitlich und randseitig eine linke und eine rechte Seitenwand 42, 44 rechtwinklig weg, auch diese Seitenwände gehen an ihrem anderen, in den Figuren jeweils dem unteren Ende, in Führungsflansche 46, 48 über, die diesmal jedoch nach außen gerichtet sind und die entsprechenden Führungsflansche 36, 38 der Außenschiene 20 untergreifen. Auch die Führungsflansche 46, 48 verlaufen parallel zur Basis 40 der entsprechenden Schiene 28, sie bilden zusammen mit den Führungsflanschen 36, 38 der Außenschiene 20 äußere Führungskanäle 54, 56 für Führungsmittel 24, 26 in Form von Wälzkörpern oder Gleitmitteln.

Die Innenflächen der Basen 30, 40 sind Abrollflächen eines als Rollkörper ausgebildeten Führungsmittels 22 und begrenzen zugleich einen inneren Führungskanal 58.

Charakteristisch ist, daß sich die beiden äußeren Führungskanäle 54, 56 nahezu auf einer Profildiagonalen und nicht, wie beim Stand der Technik, auf einer Parallelen zu den Basen 30, 40 befinden. Dies wird erreicht durch unterschiedlich hohe Seitenwände jeder Schiene 20, 28, wobei in der gezeigten Darstellung die Außenschiene eine relativ hohe linke Seitenwand 32 hat, die sich praktisch über die gesamte Höhe der Längsführung erstreckt. Ihr gegenüber ist die andere, rechte Seitenwand 34 deutlich kürzer ausgebildet, die Länge dieser rechten Seitenwand 34 entspricht der Ausbildung nach dem Stand der Technik. Ebenso ist die linke Seitenwand 42 der Innenschiene 28 deutlich gegenüber dem Stand der Technik verkürzt, während die rechte Seitenwand 44 diejenige Höhe behalten hat, die sie auch nach dem Stand der Technik hat. Dadurch bleibt zwischen dem Führungsflansch 48 der rechten Seitenwand 44 und der Basis 30 der Außenschiene — wie beim Stand der Technik — lediglich ein kleiner, wenige Millimeter hoher Luftspalt 60 frei. Demgegenüber ist der Abstand zwischen der Außenseite des linken Führungsflansches 46 der Innenschiene 28 und der Basis 30 der Außenschiene 20 relativ groß, er beträgt etwa die halbe Bauhöhe der Längsführung. Der entsprechende Raum addiert sich zum vom Hutprofil der Innenschiene 28 bestimmten Innenraum, so daß insgesamt ein relativ großer Innenraum, also eine relativ große freie Querschnittsfläche für den inneren Führungskanal 58 vorhanden ist.

Der linke Führungsflansch 36 der Außenschiene ist um wenige Millimeter gegenüber der Ebene der Basis 40 der Innenschiene 28 versetzt, wodurch die Außenseite dieser Basis 40 auf eine ebene Befestigungsfläche aufgesetzt werden kann, ohne daß die Außenfläche des linken Führungsflansches 36 auf dieser Befestigungsfläche schleift. Beide Schienen sind jeweils einstückig aus einem rechteckförmigen Blechzuschnitt geformt, wobei an den jeweils rechtwinkligen Abbiegungsstellen des Profils Rundungen, wie sie dargestellt sind, ausgebildet sind, die zugleich als Führungsfläche benutzt werden. So sind die Außenkehlen im Übergang zwischen jeweils dem Führungsflansch 46, 48 und der Seitenwand 42 bzw. 44 der Innenschiene 28 und die Innenkehle im Übergang zwischen jeweils dem Führungsflansch 36, 38 und der zugehörigen Seitenwand 32, 34 der Außenschiene 20 als Kugellaufflächen ausgebildet. Anstelle der in den Figuren eingezeichneten Kugeln als Führungsmittel 24, 26 in den äußeren Führungskanälen 54, 58 können auch Gleitmittel, beispielsweise Kunststoffstangen, eingesetzt werden. Dagegen sind im inneren Führungskanal 58 stets vorzugsweise zylindrische Rollkörper 22, die mit einem Gummi-O-Ring 62 versehen sind, der im entspannten Zustand geringfügig über den Zylindermantel vorragt. Der Durchmesser der Kugeln in den äußeren Führungskanälen 54, 56 ist für beide Führungskanäle 54, 56 gleich und liegt bei einem Viertel des Durchmessers der Rollkörper 22. Die Rollkörper 22 können auch neunzig Grad-versetzt angeordnet werden, sie wälzen sich dann einerseits auf der Innenfläche der linken Seitenwand 32 der Außenschiene 20 und andererseits der Innenwand der rechten Seitenwand 44 der Innenschiene 28 ab. Auch in diesem Fall bleibt — im Gegensatz zum Stand der Technik — jeweils neben dem Rollkörper 22 ein Teil des Innenquerschnitts des inneren Führungskanals 58 frei, der für andere Aufgaben, beispielsweise eine motorische Verstelleinrichtung, benutzt werden kann.

In den gezeigten Ausführungsbeispielen sind die höheren Seitenwände 32, 44 jeweils etwa doppelt so lang wie die kürzeren Seitenwände 42, 34. Die Gesamtbreite der Innenschiene 28 ist um zwei geringe Luftspalte kleiner als der lichte Abstand zwischen den Seitenwänden 32, 34 der Außenschiene. Ebenso ist der lichte Abstand zwischen den freien Enden der Führungsflansche 36, 38 der Außenschiene 20 um zwei schmale, seitliche Luftspalte größer als der Außenabstand der Seitenwände 42, 44 der Innenschiene. In den gezeichneten Ausführungen ist die Gesamtbreite der Längsführung etwas größer als die Gesamthöhe, hierdurch sind die möglichen Ausbildungsformen jedoch nicht beschränkt.

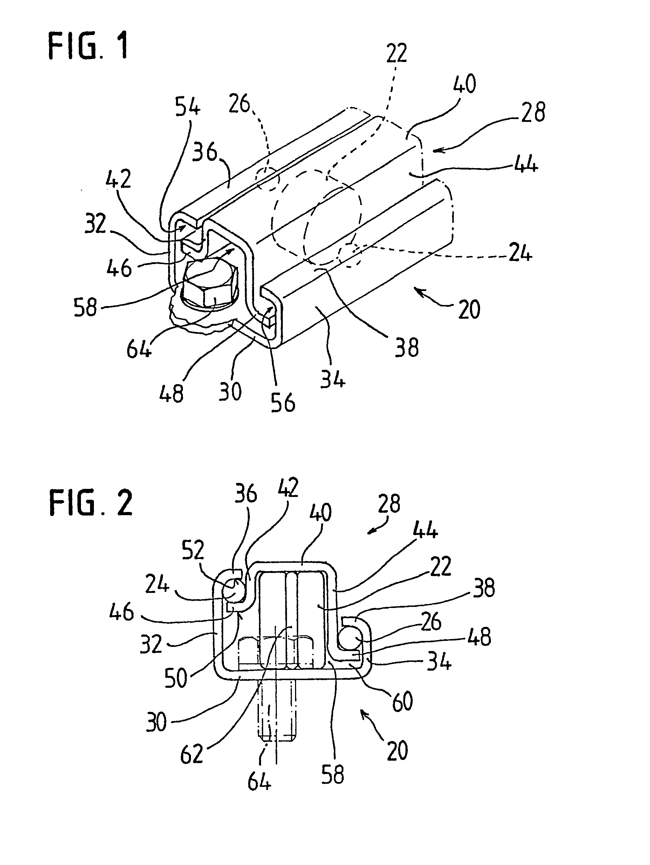

Wie insbesondere Figur 2 zeigt, ist ein Befestigungsbolzen 64 nicht — wie beim Stand der Technik — auf der Mitte der Basis 30 der Außenschiene 20 angeordnet (im Profil gesehen), vielmehr befindet er sich auf der Mitte des Zwischenraums zwischen den beiden höheren Seitenwänden 32 und 44. Dadurch bleibt, wie insbesondere Figur 2 zeigt, relativ viel Platz für den Kopf des Befestigungbolzens 64 frei, so daß die Gesamtbreite der Längsführung verringert, ein größerer Befestigungsbolzen 64 als beim Stand der Technik üblich verwendet oder der zusätzliche Platz anderweitig verwendet werden kann.

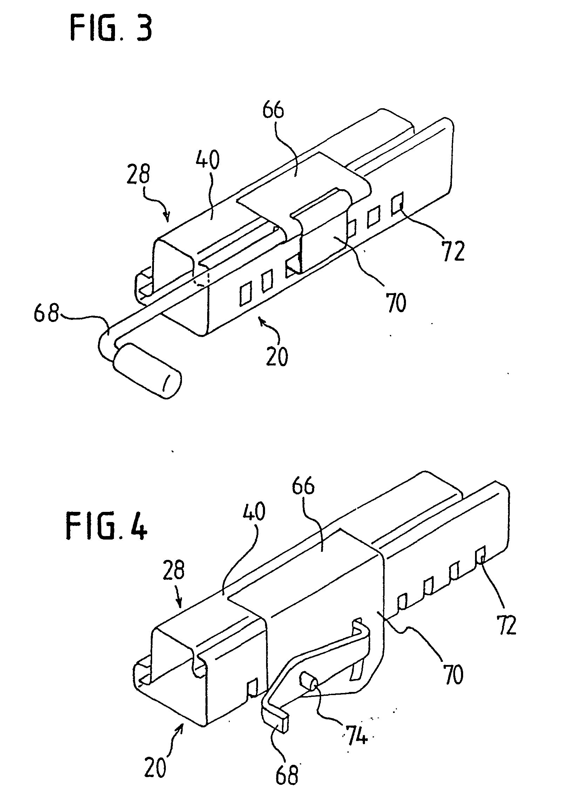

Bei der Verriegelungs- oder Arretierungsvorrichtung nach Figur 3 ist auf die Außenseite der Basis 40 der Innenschiene 28 ein Lagerblech 66 aufgepunktet, das einen Drehhebel 68 mit Handgriff lagert. An diesem wiederum ist ein in Längsrichtung gesehen L-förmiges Schließblech 70 drehfest angeordnet, das mehrere, aus der Darstellung nicht ersichtliche Sperrzähne aufweist, die in periodisch angeordnete Fenster 72 in der höheren Seitenwand 32 der Außenschiene 20 greifen, wodurch die Längsführung arretiert wird.

Ebenso ist im Ausführungsbeispiel nach Figur 4 ein einmal abgewinkeltes Lagerblech 66 vorgesehen, das in seinem vertikalen Bereich einen Lagerbolzen 74 für einen Drehhebel 68 aufnimmt, der mit einem Sperrzahn in Fenster 72 eingreift, die an der Außenrundung im Übergang zwischen Basis 30 und höherer Seitenwand 32 der Außenschiene 20 vorgesehen sind.

**Patentansprüche**

1. Längsführung für Fahrzeugsitze mit einer C-profilförmigen Außenschiene (20) und einer in dieser längsverschiebbar durch Führungsmittel (22, 24, 26) geführten Innenschiene (28) mit Hutprofil, bei der
— die Außenschiene (20) im Profil gesehen eine Basis (30) aufweist, von der randseitig und im rechten Winkel jeweils eine Seitenwand (32, 34) wegsteht und jede Seitenwand (32, 34) an ihrem anderen Ende in einen Führungsflansch (36, 38) übergeht, der nach innen gerichtet ist und im wesentlichen parallel zur Basis (30) verläuft,
— die Innenschiene (28) im Profil gesehen ebenfalls eine Basis (40) aufweist, die parallel zur Basis (30) der Außenschiene (20) verläuft und von der seitlich jeweils eine Seitenwand (42, 44) rechtwinklig wegsteht, die jeweils an ihrem anderen Ende in einen Führungsflansch (46, 48) übergeht, der nach außen gerichtet ist, parallel zur Basis (40) verläuft und eine Außenfläche (50) aufweist, die einer entsprechenden Innenfläche (52) des benachbarten Führungsflansches (36 bzw. 38) der Außenschiene (20) direkt gegenüberliegt und mit dieser jeweils einen äußeren Führungskanal (54, 56) für die Führungsmittel (24, 26) bildet,
— wobei zwischen den Innenflächen der Basen (30, 40) ein innerer Führungskanal (58) für als Rollkörper ausgebildete Führungsmittel (22) vorhanden ist und zwischen einem Führungsflansch (48) der Innenschiene (28) und der gegenüberliegenden Innenwand der Basis (30) der Außenschiene ein Luftspalt (60) von wenigen Millimetern freibleibt,
dadurch gekennzeichnet, daß die eine Seitenwand (32) der Außenschiene (20) deutlich höher ist als die andere Seitenwand (34), zum Beispiel doppelt so hoch ist, daß entsprechend die der längeren Seitenwand (32) der Außenschiene (20) benachbarte Seitenwand (42) der Innenschiene (28) deutlich kürzer ausgebildet ist als die andere Seitenwand (44), und daß der Führungsflansch (36) der längeren Seitenwand (32) der Außenschiene (20) im wesentlichen in der Ebene der Basis (40) der Innenschiene (28) verläuft.

2. Längsführung nach Anspruch 1, dadurch gekennzeichnet, daß der Führungsflansch (36) der längeren Seitenwand (32) der Außenschiene (20) wenige Millimeter, zum Beispiel um seine Materialstärke, gegenüber der Ebene der Basis (40) der Innenschiene (28) zur eigenen Basis (30) hin versetzt ist.

3. Längsführung nach Anspruch 1 oder 2, dadurch gekennzeichnet, daß die beiden Schienen (20, 28) jeweils einstückig aus einem Blechzuschnitt geformt sind.

4. Längsführung nach einem der Ansprüche 1 bis 3, dadurch gekennzeichnet, daß die Außenkehle im Übergang zwischen Führungsflansch (46, 48) und Seitenwand (42, 44) der Innenschiene (28) und die Innenkehle im Übergang zwischen Führungsflansch (36, 38) und Seitenwand (32, 34) der Außenschiene (20) als Kugelaufflächen ausgebildet sind.

5. Längsführung nach einem der Ansprüche 1 bis 4, dadurch gekennzeichnet, daß der lichte Abstand zwischen den Basen (30, 40) mindestens dreimal, vorzugsweise viermal bis fünfmal größer ist als der in gleicher Richtung bestimmte, lichte Abstand zwischen den Führungsflanschen (36, 46 bzw. 38, 48).

6. Längsführung nach einem der Ansprüche 1 bis 5, dadurch gekennzeichnet, daß der lichte Abstand zwischen den beiden Basen (30, 40) dem lichten Abstand zwischen den jeweils höheren Seitenwänden (32, 44) gleich ist, und daß vorzugsweise der lichte Abstand zwischen dem Führungsflansch (46) der kürzeren Seitenwand (42) der Innenschiene (28) und der Basis (30) der Außenschiene (20) dem lichten Abstand zwischen den beiden Seitenwänden (42, 44) der Innenschiene (48) gleich ist.

7. Längsführung nach einem der Ansprüche 1 bis 6 mit Befestigungslöchern für einen Befestigungsbolzen (64) in der Basis (30) der Außenschiene (20), dadurch gekennzeichnet, daß sich im montierten Zustand der Befestigungsbolzen (64) auf der Mitte zwischen den jeweils längeren Seitenwänden (32, 44) befindet, in jedem Fall aber nicht auf der Profilmitte der Basis (30) angeordnet ist.

8. Längsführung nach einem der Ansprüche 1 bis 7, dadurch gekennzeichnet, daß sich die äußeren Führungskanäle (54, 56) im wesentlichen auf einer Diagonalen des allgemein gesehen rechtwinkligen Profils der Längsführung befinden.

## Revendications

1. Organe de guidage longitudinal pour sièges de véhicules automobiles comportant un rail extérieur (20) à profil en C et un rail intérieur (28) à profil en chapeau, guidé coulissant dans le premier, par des moyens de guidage (22, 24, 26), dans lequel

— le rail extérieur (20), vu de profil, présente une base (30) dont une paroi latérale (32, 34) fait saillie sur le bord et à angle droit par rapport à celle-ci et chaque paroi latérale (32, 34) se prolonge, à son autre extrémité, par une bride de guidage (36, 38) qui est dirigée vers l'intérieur et qui s'étend à peu près parallèlement à la base (30),

— le rail intérieur (38), vu de profil, présente aussi une base (40) qui est parallèle à la base (30) du rail extérieur (20) et de laquelle fait saillie latéralement, à angle droit, une paroi latérale (42, 44) dont chacune se prolonge, sur son autre extrémité, par une bride de guidage (46, 48) qui est dirigée vers l'extérieur, qui s'étend parallèlement à la base 40 et présente une surface extérieure (50) qui fait directement face à une surface intérieure (52) de la bride de guidage (36 ou 38) voisine du rail extérieur (20) et forme avec celui-ci, un canal de guidage (54, 56) extérieur pour les moyens de guidage (24, 26),

— un canal de guidage (58) intérieur pour des moyens de guidage (22), se présentant sous la forme de corps de roulement, étant prévu entre les surfaces intérieures des bases (30, 40) et un entrefer (60) de quelques millimètres restant entre une bride de guidage (48) du rail intérieur (28) et la paroi intérieure opposée de la base (30) du rail extérieur,

caractérisé en ce qu'une paroi latérale (32) du rail extérieur (20) est nettement plus haute que l'autre paroi latérale (34), par exemple deux fois plus haute, en ce que, en correspondance, la paroi latérale (42) du rail intérieur (28), voisine de la paroi latérale (32) plus longue du rail extérieur (20), est nettement plus courte que l'autre paroi latérale (44) et en ce que la bride de guidage (36) de la paroi latérale (32) plus longue du rail extérieur (20) s'étend à peu près dans le plan de la base (40) du rail intérieur (28).

2. Organe de guidage longitudinal selon la revendication 1, caractérisé en ce que la bride de guidage (36) de la paroi latérale plus longue (32) du rail extérieur (20), est décalée de quelques millimètres, par exemple de son épaisseur de matière, par rapport au plan de la base (40) du rail intérieur (28), en direction de sa propre base (30).

3. Organe de guidage longitudinal selon l'une des revendications 1 ou 2, caractérisé en ce que les deux rails (20, 28) sont formés d'une seule pièce dans une découpe de tôle.

4. Organe de guidade longitudinal selon l'une des revendications 1 à 3, caractérisé en ce que la gorge extérieure, dans la zone de transition entre la bride de guidage (46, 48) et la paroi latérale (42, 44) du rail intérieur (28) et la gorge intérieure, dans la zone de transition entre la bride de guidage (36, 38) et la paroi latérale (32, 34) du rail extérieur (20), sont des surfaces de roulement de billes.

5. Organe de guidage longitudinal selon l'une des revendications 1 à 4, caractérisé en ce que la distance séparant les bases (30, 40) est au moins trois fois, de préférence quatre à cinq fois, supérieure à la distance, déterminée dans la même direction, séparant les brides (36, 46) ou (38, 48).

6. Organe de guidage longitudinal selon l'une des revendications 1 à 5, caractérisé en ce que la distance séparant les deux bases (30, 40) est égale à la distance séparant les parois latérales plus hautes (32, 44) et en ce que, de préférence, la distance séparant la bride de guidage (46) de la paroi latérale plus courte (42) du rail intérieur (28) et la base (30) du rail extérieur (20), est égale à la distance séparant les deux parois latérales (42, 44) du rail intérieur (48).

7. Organe de guidage longitudinal selon l'une des revendications 1 à 6 avec trous de fixation pour un boulon de fixation (64), pratiqués dans la base (30) du rail extérieur (20), caractérisé en ce qu'à l'état monté, le boulon de fixation (64) se trouve au milieu, entre les parois latérales plus longues (32, 44) mais en tout cas pas au centre du profil de la base (30).

8. Organe de guidage longitudinal selon l'une des revendications 1 à 7, caractérisé en ce que les canaux de guidage (54, 56) extérieurs se trouvent à peu près sur une diagonale du profil, en général à angle droit, de l'organe de guidage longitudinal.

## Claims

1. Longitudinal guide for vehicle seats with a C-shaped outer rail (20) and a hat-shaped inner rail (28) guided to slide longitudinally therein by guide means (22, 24, 26), in which
— seen in profile, the outer rail (20) has a base (30) from the edges of which and at right angles a side wall (32, 34) respectively projects and at its other end each side wall (32, 34) passes into a guide flange (36, 38), which is directed inwards and extends substantially parallel to the base (30),
— seen in profile, the inner rail (28) likewise comprises a base (40), which extends parallel to the base (30) of the outer rail (20) and from the sides of which a side wall (42, 44) respectively projects at right angles, which at its other end passes respectively into a guide flange (46, 48), which is directed outwards, extends parallel to the base (40) and comprises an outer surface (50), which lies directly opposite a corresponding inner surface (52) of the adjacent guide flange (36, 38) of the outer rail (20) and with the latter respectively forms an outer guide channel (54, 56) for the guide means (24, 26),
— an inner guide channel (58) for guide means (22) constructed as rolling members being provided between the inner surfaces of the bases (30, 40) and an air gap (60) of several millimetres remaining between one guide flange (48) of the inner rail (28) and the opposing inner wall of the base (30) of the outer rail,
characterised in that the one side wall (32) of the outer rail (20) is clearly higher than the other side wall (34), for example twice as high so that correspondingly the side wall (42) of the inner rail (28) adjacent the longer side wall (32) of the outer rail (20) is constructed to be clearly shorter than the other side wall (44) and that the guide flange (36) of the longer side wall (32) of the outer rail (20) extends substantially in the plane of the base (40) of the inner rail (28).

2. Longitudinal guide according to Claim 1, characterised in that the guide flange (36) of the longer side wall (32) of the outer rail (20) is offset towards its own base (30) by a few millimetres, for example by its material thickness, with respect to the plane of the base (40) of the inner rail (28).

3. Longitudinal guide according to Claim 1 or 2, characterised in that the two rails (20, 28) are each formed in one piece from a sheet metal blank.

4. Longitudinal guide according to one of Claims 1 to 3, characterised in that the outer channel at the transition point between the guide flange (46, 48) and side wall (42, 44) of the inner rail (28) and the inner channel at the transition point between the guide flange (36, 38) and side wall (32, 34) of the outer rail (20) are constructed as ball races.

5. Longitudinal guide according to one of Claims 1 to 4, characterised in that the clearance between the bases (30, 40) is at least three times, preferably four to five times greater than the clearance between the guide flanges (36, 46 or 38, 48), determined in the same direction.

6. Longitudinal guide according to one of Claims 1 to 5, characterised in that the clearance between the two bases (30, 40) is the same as the clearance between the respective higher side walls (32, 44) and that preferably the clearance between the guide flange (46) of the shorter side wall (42) of the inner rail (28) and the base (30) of the outer rail (20) is the same as the clearance between the two side walls (42, 44) of the inner rail (48).

7. Longitudinal guide according to one of Claims 1 to 6 with mounting holes for a mounting bolt (64) in the base (30) of the outer rail (20), characterised in that in the assembled state the mounting bolt (64) is located at the centre between the respective longer side walls (32, 44), but in any case is not located at the profile centre of the base (30).

8. Longitudinal guide according to one of Claims 1 to 7, characterised in that the outer guide channels (54, 56) are located substantially on a diagonal of the profile of the longitudinal guide, which seen generally is right-angled.

FIG. 1

FIG. 2

# FIG. 3

# FIG. 4